# EUROPEAN PATENT SPECIFICATION

(11) **EP 3 615 290 B1**
(45) Date of publication and mention of the grant of the patent: **12.01.2022**
(21) Application number: 18717951.0
(22) Date of filing: 23.04.2018
(51) Int. Cl.: B29B 11/16

(54) **A PREFORM WITH LOCAL REINFORCEMENT**
VORFORM MIT LOKALER VERSTÄRKUNG
PRÉFORME À RENFORCEMENT LOCAL

(30) Priority: 25.04.2017 EP 17020163
(43) Date of publication of application: 04.03.2020
(73) Proprietor: Hexcel Reinforcements UK Limited, Duxford Cambridge CB22 4QD (GB); Hexcel Holding GmbH, 4061 Pasching (AT)
(72) Inventor: JAMES, Thomas, Duxford Cambridgeshire CB22 4QB (GB); FROST, Robert, Duxford Cambs CB22 4QB (GB); SAGEDER, Andreas, 4061 Pasching (AT)
(74) Representative: TLIP Limited
(86) International application number: PCT/EP2018/060383
(87) International publication number: WO 2018/197437

(56) References cited:
- WO-A1-2004/078443
- WO-A1-2014/108640
- WO-A1-2014/166493
- WO-A1-2018/046706
- DE-A1- 19 625 800
- DE-B4- 19 625 800
- US-A1- 2009 163 292
- US-A1- 2015 107 505

## Description

### INTRODUCTION

The present invention is concerned with a method of manufacture of composite preforms, and in particular with a method of manufacture of preforms having a load path orientated ply book.

### BACKGROUND

By "preform" we mean a two- or three- dimensional arrangement of fibre plies having multiple layers, the arrangement being in a pre-cured condition. Preforms are also either formed or cut to the shape in which they will be moulded.

Composite materials are well known and used in many fields of engineering. Composite materials comprise at least two phases constructed from physically and / or chemically distinct materials: a reinforcement and a matrix. In fibre reinforced composites, the fibre is typically a material with high tensile strength but low stiffness. The matrix is usually less strong, but has a relatively high stiffness. When the fibres are placed into (impregnated) with the matrix, a composite material is provided having high strength, high stiffness and relatively low density (both phases are relatively low density compared to e.g. steel).

Because of these properties, and because of other beneficial properties such as corrosion resistance and low thermal expansion, the use of fibre reinforced polymer (FRP) materials is increasing. The combination of properties makes these materials favourable compared to traditional materials (e.g. metals) in many applications in the aerospace and automotive fields and beyond.

One feature of FRP materials is that the fibres (which are normally provided in layers, or plies) are highly anisotropic. The strength in the direction of the fibre axis is significantly higher than in any other direction. Therefore, in continuous or long-fibre forms it is common for several plies to be provided in layers, each ply or layer having fibres oriented in a different direction to the adjacent ply or plies. In this way, the directional properties of the material can be tailored to suit the application.

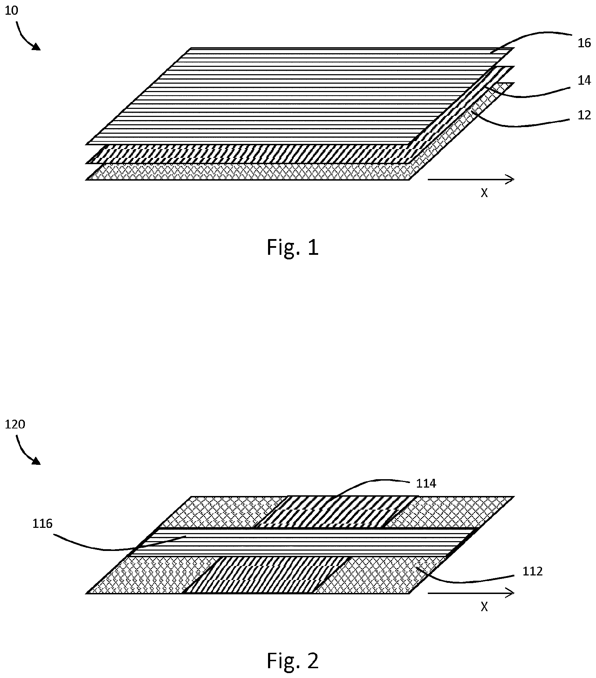

Figure 1 shows a typical carbon fibre reinforced polymer ply preform 10 in which three layers 12, 14, 16 are provided with fibres oriented at ±45 degrees (layer 12), 90 degrees (layer 16) and 0 degrees (layer 14) to the axis X respectively. This combination of a plurality of layers, or plies, is often referred to as a "ply book". Each layer is formed from a fibre sheet created from strips of deposited carbon fibre tow. The tows are deposited in a pre-determined orientation in each layer. In this example, the plies are constructed from non-crimp fabrics (NCFs). The non-crimp fabrics (NCFs) are manufactured by depositing fibre tow onto a bed before binding the tow with either stitching or adhesive. This means that instead of being e.g. woven, the fibre tow is held in sheet form to avoid any crimping of the fibres. NCFs have generally better mechanical characteristics than their crimped / woven counterparts. The layered fabric is cut to the desired shape, formed and impregnated via e.g. a resin transfer moulding (RTM) or "wet pressing" operation as known in the art.

Document US 2009/163292 discloses a method of manufacturing a preform comprising the steps of:forming a reinforcement fabric by depositing a first fibre layer; and, depositing a second fibre layer, wherein the second layer extends partially over the area defined by the first layer; cutting a preform from the reinforcement fabric after the step of forming the reinforcement fabric.

One drawback of FRP materials is their cost. Of the two phases in a composite material, the majority of the cost of the material usually lies in the reinforcement / fibre phase. Carbon fibre is a common reinforcement material in high performance engineering applications. A problem with carbon is that it is expensive to process into the required fibre form. Carbon fibres are created from a precursor material which needs to be fiberized and carbonised in a highly energy intensive process. Therefore, it is expensive to purchase as a raw material for manufacture of FRP components.

It is therefore desirable to reduce the amount of fibre reinforcement material used in FRP components.

In most cases, FRP components will undergo specific loads depending on their environment. In the case of the preform 10 of Figure 1, these loads are managed by providing three layers which extend across the entire component.

It will be understood that in some areas, the reinforcement phase is not carrying significant loads, and as such is effectively redundant. Taking the example of the preform 10 of Figure 1, in a specific load environment a significant proportion of the fibre may be redundant. This is potentially wasteful and increases the cost of the part unnecessarily. It may also make the part heavier than it needs to be (carbon fibres have a much higher density than the polymer matrix, thereby adding parasitic weight).

### SUMMARY OF THE INVENTION

The present invention aims to obviate or at least mitigate the above described problem and/or to provide improvements generally.

According to the invention there is provided a method as defined in any of the accompanying claims.

In an embodiment of the present invention there is provided a method of manufacturing a preform according to the subject-matter of the independent claim 1.

To reduce the amount of reinforcement material used in FRP components, the fibre material thus is positioned only in the areas in which it is required by the load environment and duty cycle of the component. In other words the ply book within the preform is formed to be "load orientated".

The invention can therefore provide a load-orientated ply-book as a continuous NCF reinforcement fibre from which preforms can be cut.

This is an alternative concept to using either an automated tape layup (ATP) process or an automated fibre placement (AFP) process. In both cases, fibre tow forming layers are directly deposited to form the preform. A problem with this approach is that both ATP and AFP involve significant capital cost to implement. They also introduce a time-consuming step in the production of the preform.

By directly depositing the plies in the required pattern / form before they are cut into preforms, there is no need to implement ATP or AFP. Therefore, the present invention provides the advantages of the load-orientated ply book without the need for expensive and time consuming ATP and AFP manufacturing steps.

In an embodiment of the invention the second fibre layer extends only partially to the outer edges of the first fibre layer. Preferably, the first fibre layer has a perimeter which is defined by the combined outer edges of the first fibre layer, and the second fibre layer extends to a fraction of the perimeter, the fraction between smaller than the complete perimeter of the first fibre layer.

The fraction may comprise 0.2, 0.4, 0.6, 0.8, 0.1 - 0.4, 0.2 - 0.9, 0.3 - 0.8, 0.4-0.7, 0.5 - 0.9, 0.6 - 0.95, 0.7 - 0.9 and/or a combinations of any of the aforesaid values and/or ranges.

Preferably the method comprises the step of depositing a further fibre layer, wherein the further layer extends partially over the area defined by the first layer. The further layer may extend partially over the area defined by the second layer. The further layer may extend over a part of the area defined by the first layer, which area is not covered by the second layer.

Preferably the method comprises the step of connecting the layers to one another, for example by adhering and / or stitching the layers together.

Preferably the second and / or further layer is arranged in relation to a load path of a part which is manufactured from the preform.

In another embodiment, at least one additional layer is deposited in relation to any of the first, second or further layers.

Preferably, a layer comprises unidirectional fiber tows extending in one direction. In a further embodiment, the layers are arranged in relation to one another so that the direction of the tows in the first and second layer differs.

Preferably the second layer is deposited in at least one elongate strip, and in which the fibres of the second layer are aligned with the strip. In other words, the fibres are oriented along the long axis of the strip.

Preferably the method comprises the steps of:
providing a non-crimp fabric manufacturing machine;
forming the reinforcement fabric on the non-crimp fabric manufacturing machine. Preferably the reinforcement fabric is formed continuously in a first direction by an NCF machine (the "feed direction").

The second layer may comprise at least one strip spanning the width of the reinforcement fabric in a second direction angled to the first (i.e. angled in relation to the feed direction). A further layer may comprise at least one strip extending in the first direction or at a different angle in relation to the first direction (i.e. in the feed direction or angled thereto and the strip may be crossing the strips of the second layer). The angles between the first layer and any second and further layer or further layers may range from 0 to +/-90 degrees in relation to the first layer, including any angles from +/-20 to +/-80 degrees, +/-30 to +/-60 degrees, and in particular angles of +/-30 degrees, +/-45 degrees and +/-60 degrees.

Preferably the plurality of preforms each comprise part of the first and second layers.

### DETAILED DESCRIPTION

Embodiments of the invention will now be illustrated by way of example only and with reference to the accompanying drawings in which:
Figure 1 is an exploded perspective diagrammatic view of a preform of the prior art;
Figure 2 is a perspective diagrammatic view of a preform manufactured by the method according to the invention;
Figure 3 is a plan diagrammatic view of an apparatus carrying out a method in accordance with the present invention; and;
Figure 4 is a flow diagram of the method of Figure 3.

Referring to Figure 2, a preform 120 with a load orientated ply book is shown. The first layer 112 is identical to the first layer 12 of Figure 1, but the second and third layers 114, 116 have been provided to only partially span the preform 120. The second and third layers 114, 116 only cover part of the area defined by the first layer 12. Therefore the 0 degree and 90 degree fibres are provided only in the areas in which they are required. Clearly, such a part will be less expensive and lighter than the part formed from the preform 10 as shown in Figure 1.

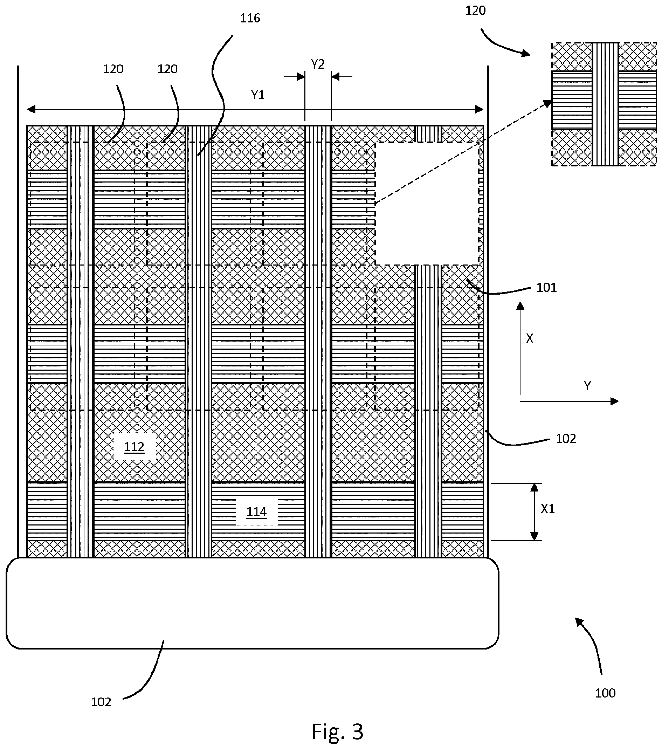

Referring to Figure 3 a manufacturing cell 100 comprises an NCF machine 102 having a bed 104. The cell is configured to manufacture the preforms 120. The NCF machine 102 is configured to deposit carbon fibre tow to produce a continuous length of load-orientated non-crimp fabric in a direction X. The machine 102 is configured to produce the first layer 112 of ±45 degree non-crimp fabric 101 having a continuous width Yl. The machine is further configured to generate the second layer 114 of 90 degree fabric. Instead of the second layer covering the entire surface of the first layer, it is deposited in a plurality of strips of width X1 , spaced apart in the direction X. The machine is further configured to generate the further layer 116 of 0 degree fabric. The further layer runs in the X direction, but is deposited in a plurality of spaced apart strips of width Y1 in the Y direction.

This arrangement provides a pre-defined load orientated ply book. As shown at the top of Figure 3 in dashed lines, individual preforms 120 can be cut from the fabric. The preforms 120 are shown spaced-apart for clarity, but it will be understood that in practice they will be adjacent. It will be noted that the preforms 120 do not require the use of ATP or AFP to deposit the second or third layers 114, 116.

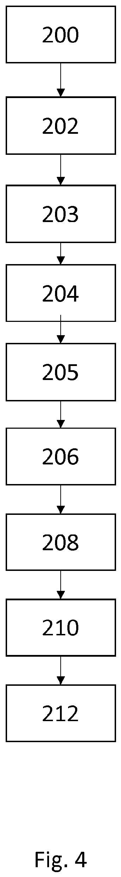

Referring to Figure 4, the sequence of manufacture is shown in more detail.

At step 200, the first layer 112 is deposited in a continuous length by the NCF machine 102. At step 202, the second layer 114 is deposited so as to cover a part of the first layer 112, in this embodiment in strips in the Y direction, spaced apart in the X direction. The fibres of the second layer 114 are oriented in the direction of the strips (i.e. in the Y direction, or at 90 degrees to the X axis). At step 203, the further layer 116 is deposited onto the first and second layers 112, 114. In this embodiment the further layer is strips in the X direction, spaced apart in the Y direction. The fibres of the further layer 116 are oriented in the direction of the strips (i.e. in the Z direction, or at 0 degrees). At step 204, the fibres of the various layers 112,114 116 are stitched together.

At step 206, once the layers have been deposited and connected to one another to form the load orientated fabric 101, preforms 120 are cut.

The preforms 120 are shaped at step 208 (for example by lay up in a mould), impregnated at step 210 and cured at step 212 to form parts having load orientated ply books.

Variations fall within the scope of the present invention.

Although the plies are stitched in the above embodiment, they may be attached by other means such as an adhesive. A thermoplastic polymer binder may be used, which may be provided in e.g. powder form and applied between layers.

Multiple fibre plies may be provided including a first ply, a second ply and multiple further plies. The important step is that the plies are deposited in a load-orientated manner before the preforms are cut from the fabric.

The fibre orientation in each ply may be selected based on the required application. It is not essential for the fibre direction to be parallel to each "strip" forming the ply.

Although depositing plies in strips at 0 and 90 degrees is well suited to most existing NCF machines, this is not essential. The strips may be provided at varying angles ranging from 0 to 90 degrees, preferably from 10 to 80 degrees and more preferably from 30 to 60 degrees including 45 degrees as measured as the smallest angle between the direction of the fibre tows of the first layer in relation to the other layers. In a preferred embodiment, the direction of the tows in at least two layers is symmetrical but at opposing angles in relation to the direction of the fibre tows of a first layer (for example +/- 45 degrees, +/- 60 degrees).

The present application is not limited to the use of carbon fibres, and may be implemented with other fibre tows including glass fibre, basalt, polyamide based fibres, polyolefin based fibres and aramid fibres.

The invention can be used with any kind of NCF configuration (BiAx, TriAx, QuadAx, in 0°, 90°, +45°,-45° direction and any other fiber direction (everything) in between).

## Claims

1. A method of manufacturing a preform (120) comprising the steps of:
forming a reinforcement fabric by:
depositing a first fibre layer (112); and,
depositing a second fibre layer (114), wherein the second layer (114) extends partially over the area defined by the first layer (112);
cutting a plurality of preforms (120) from the reinforcement fabric after the step of forming the reinforcement fabric;
wherein a layer comprises unidirectional fibre tows extending in one direction;
the method further comprising the steps of:
providing a non-crimp fabric manufacturing machine (102); and
forming the reinforcement fabric on the non-crimp fabric manufacturing machine (102);
wherein the reinforcement fabric is formed continuously in a first direction (X).

2. A method according to claim 1, comprising the step of depositing a further fibre layer (116), wherein the further layer (116) extends partially over the area defined by the first layer (112);
optionally in which the further layer (116) extends partially over the area defined by the second layer (114);
preferably in which the further layer (116) also extends over a part of the area defined by the first layer (112), which area is not covered by the second layer (114).

3. A method according to claim 1 or claim 2, wherein at least one additional layer is deposited in relation to any of the first, second or further layers (112,114,116) and/or wherein the first and second layers (112, 114) are in contact with one another.

4. A method according to any preceding claim, comprising the step of connecting the layers (112, 114, 116) to one another; optionally comprising the step of adhering the layers (112, 114, 116) to one another and/or stitching the layers (112, 114, 116) together.

5. A method according to any of the preceding claims, wherein one or more of the respective layers (112, 114, 116) is arranged in relation to a load path of a part which is manufactured from the preform (120).

6. A method according to any of the preceding claims, in which the directions of the tows in at least the first and second layers (112, 114) differ.

7. A method according to any preceding claim in which the second layer (114) comprises at least one strip spanning the width of the reinforcement fabric in a second fibre tow direction at an angle in the range of from 10 to 90 degrees to the first tow direction;
and preferably in which a further layer (116) comprises at least one strip extending in the first direction (X), crossing the at least one strip of the second layer (114).

8. A method according to any of the preceding claims, in which a plurality of preforms (120) each comprise part of the first and second layers (112, 114).

9. A method according to any of the preceding claims, wherein the first fibre layer (112) has a perimeter which is defined by the combined outer edges of the first fibre layer (112), and the second fibre layer (114) is deposited to extend to a fraction of the perimeter of the first fibre layer (112), the fraction being smaller than the complete perimeter of the first fibre layer (112); preferably wherein the fraction comprises 0.1 - 0.4, 0.2 - 0.9, 0.3 - 0.8, 0.4-0.7, 0.5 - 0.9, 0.6 - 0.95, 0.7 - 0.9 and/or a combinations of any of the aforesaid ranges.

## Patentansprüche

1. Verfahren zum Herstellen eines Vorformlings (120), umfassend die Schritte:
Bilden eines Verstärkungsgewebes durch:
Aufbringen einer ersten Faserschicht (112); und,
Aufbringen einer zweiten Faserschicht (114), wobei sich die zweite Schicht (114) teilweise über den durch die erste Schicht (112) definierten Bereich erstreckt;
Schneiden einer Vielzahl von Vorformlingen (120) aus dem Verstärkungsgewebe nach dem Schritt des Bildens des Verstärkungsgewebes;
wobei eine Schicht unidirektionale Faserstränge umfasst, die sich in einer Richtung erstrecken;
wobei das Verfahren ferner die Schritte umfasst:
Bereitstellen einer Maschine zur Gelegefertigung (102); und
Bilden des Verstärkungsgewebes auf der Maschine zur Gelegefertigung (102);
wobei das Verstärkungsgewebe in einer ersten Richtung (X) durchgehend ausgebildet ist.

2. Verfahren nach Anspruch 1, umfassend den Schritt des Aufbringens einer weiteren Faserschicht (116), wobei sich die weitere Schicht (116) teilweise über den durch die erste Schicht (112) definierten Bereich erstreckt;
optional bei dem sich die weitere Schicht (116) teilweise über den durch die zweite Schicht (114) definierten Bereich erstreckt;
vorzugsweise bei dem sich die weitere Schicht (116) auch über einen Teil des durch die erste Schicht (112) definierten Bereich erstreckt, welcher Bereich nicht durch die zweite Schicht (114) bedeckt ist.

3. Verfahren nach Anspruch 1 oder Anspruch 2, wobei mindestens eine zusätzliche Schicht in Bezug auf eine von der ersten, zweiten oder weiteren Schicht (112, 114, 116) aufgebracht wird und/oder wobei die erste und zweite Schicht (112, 114) in Berührung miteinander stehen.

4. Verfahren nach einem der vorhergehenden Ansprüche, umfassend den Schritt des Verbindens der Schichten (112, 114, 116) miteinander; optional umfassend den Schritt des Aneinanderklebens der Schichten (112, 114, 116) und/oder des Zusammennähens der Schichten (112, 114, 116).

5. Verfahren nach einem der vorhergehenden Ansprüche, wobei eine oder mehrere der jeweiligen Schichten (112, 114, 116) in Bezug auf einen Lastpfad eines Teils angeordnet werden, das aus dem Vorformling (120) hergestellt wird.

6. Verfahren nach einem der vorhergehenden Ansprüche, bei dem sich die Richtungen der Stränge zumindest in der ersten und zweiten Schicht (112, 114) unterscheiden.

7. Verfahren nach einem der vorhergehenden Ansprüche, bei dem die zweite Schicht (114) mindestens einen Streifen umfasst, der die Breite des Verstärkungsgewebes in einer zweiten Faserstrangrichtung in einem Winkel im Bereich von 10 bis 90 Grad zur ersten Strangrichtung überspannt;
und vorzugsweise bei dem eine weitere Schicht (116) mindestens einen Streifen umfasst, der sich in der ersten Richtung (X) erstreckt, wobei er den mindestens einen Streifen der zweiten Schicht (114) kreuzt.

8. Verfahren nach einem der vorhergehenden Ansprüche, bei dem eine Vielzahl von Vorformlingen (120) jeweils einen Teil der ersten und zweiten Schicht (112, 114) umfassen.

9. Verfahren nach einem der vorhergehenden Ansprüche, wobei die erste Faserschicht (112) einen Umfang aufweist, der durch die kombinierten Außenkanten der ersten Faserschicht (112) definiert wird, und die zweite Faserschicht (114) so aufgebracht ist, dass sie sich auf einen Bruchteil des Umfangs der ersten Faserschicht (112) erstreckt, wobei der Bruchteil kleiner ist als der vollständige Umfang der ersten Faserschicht (112); vorzugsweise wobei der Bruchteil 0,1 - 0,4, 0,2 - 0,9, 0,3 - 0,8, 0,4 - 0,7, 0,5 - 0,9, 0,6 - 0,95, 0,7 - 0,9 und/oder eine Kombination aus einem der vorgenannten Bereiche umfasst.

## Revendications

1. Procédé de fabrication d'une préforme (120), comprenant les étapes de :
formation d'un tissu de renforcement par :
le dépôt d'une première couche de fibres (112) ; et,
le dépôt d'une seconde couche de fibres (114), ladite seconde couche (114) s'étendant partiellement sur la zone définie par la première couche (112) ;
la découpe d'une pluralité de préformes (120) à partir du tissu de renforcement après l'étape de formation du tissu de renforcement ;
une couche comprenant des câbles de fibre unidirectionnels s'étendant dans une direction ;
le procédé comprenant en outre les étapes de :
fourniture d'une machine de fabrication de tissu non frisé (102) ; et
formation du tissu de renforcement sur la machine de fabrication de tissu non frisé (102) ;
ledit tissu de renforcement étant formé en continu dans une première direction (X).

2. Procédé selon la revendication 1, comprenant l'étape de dépôt d'une couche de fibres supplémentaire (116), ladite couche supplémentaire (116) s'étendant partiellement sur la zone définie par la première couche (112) ;
éventuellement dans lequel la couche supplémentaire (116) s'étend partiellement sur la zone définie par la seconde couche (114) ;
de préférence dans lequel la couche supplémentaire (116) s'étend également sur une partie de la zone définie par la première couche (112), laquelle zone n'est pas couverte par la seconde couche (114).

3. Procédé selon la revendication 1 ou la revendication 2, au moins une couche additionnelle étant déposée par rapport à l'une quelconque des première couche, seconde couche ou couche supplémentaire (112, 114, 116) et/ou lesdites première et seconde couches (112, 114) étant en contact l'une avec l'autre.

4. Procédé selon une quelconque revendication précédente, comprenant l'étape de raccordement des couches (112, 114, 116) les unes aux autres ; comprenant éventuellement l'étape d'adhérence des couches (112, 114, 116) les unes aux autres et/ou de couture des couches (112, 114, 116) ensemble.

5. Procédé selon l'une quelconque des revendications précédentes, une ou plusieurs des couches respectives (112, 114, 116) étant agencées par rapport à un trajet de charge d'une pièce qui est fabriquée à partir de la préforme (120).

6. Procédé selon l'une quelconque des revendications précédentes, dans lequel les directions des câbles dans au moins les première et seconde couches (112, 114) diffèrent.

7. Procédé selon une quelconque revendication précédente, ladite seconde couche (114) comprenant au moins une bande couvrant la largeur du tissu de renforcement dans une seconde direction de câble de fibre à un angle compris dans la plage allant de 10 à 90 degrés par rapport à la première direction de câble ;
et de préférence dans lequel une couche supplémentaire (116) comprend au moins une bande s'étendant dans la première direction (X), traversant la au moins une bande de la seconde couche (114).

8. Procédé selon l'une quelconque des revendications précédentes, dans lequel une pluralité de préformes (120) comprennent chacune une partie des première et seconde couches (112, 114).

9. Procédé selon l'une quelconque des revendications précédentes, ladite première couche de fibres (112) possédant un périmètre qui est défini par les bords externes combinés de la première couche de fibres (112), et ladite seconde couche de fibres (114) étant déposée pour s'étendre sur une fraction du périmètre de la première couche de fibres (112), la fraction étant inférieure au périmètre complet de la première couche de fibres (112) ; de préférence ladite fraction comprenant 0,1 à 0,4, 0,2 à 0,9, 0,3 à 0,8, 0,4 à 0,7, 0,5 à 0,9, 0,6 à 0,95, 0,7 à 0,9 et/ou une combinaison de l'une quelconque des plages susmentionnées.
